# EUROPEAN PATENT SPECIFICATION

(11) **EP 2 690 128 B1**
(45) Date of publication and mention of the grant of the patent: **28.10.2015**
(21) Application number: 12763086.1
(22) Date of filing: 22.03.2012
(51) Int. Cl.: C08J 5/24

(54) **PREPREG AND FIBER REINFORCED COMPOSITE MATERIAL**
PREPREG UND FASERVERSTÄRKTES VERBUNDMATERIAL
PRÉ-IMPRÉGNÉ ET MATÉRIAU COMPOSITE RENFORCÉ PAR FIBRES

(30) Priority: 25.03.2011 JP 2011067357
(43) Date of publication of application: 29.01.2014
(73) Proprietor: Toray Industries, Inc., Tokyo, 103-8666 (JP)
(72) Inventor: MATSUDA, Ayumi, 791-3193 Ehime (JP); KUNIMITSU, Yumi, 791-3193 Ehime (JP); KAWAMOTO, Shiori, 791-3193 Ehime (JP); KOCHI, Shinji, 791-3193 Ehime (JP)
(74) Representative: Webster, Jeremy Mark
(86) International application number: PCT/JP2012/057310
(87) International publication number: WO 2012/133096

(56) References cited:
- EP-A1- 0 564 235
- EP-A2- 0 420 655
- JP-A- 2001 049 013
- JP-A- 2001 114 915
- JP-A- 2008 214 547
- US-A- 4 957 801
- US-A1- 2010 009 149
- US-A1- 2011 015 347
- US-B1- 6 596 373
- HAN S ET AL: "Enhancing the thermal conductivity and compressive modulus of carbon fiber polymer-matrix composites in the through-thickness direction by nanostructuring the interlaminar interface with carbon black", CARBON, ELSEVIER, OXFORD, GB, vol. 46, no. 7, 1 June 2008 (2008-06-01), pages 1060-1071, XP022669874, ISSN: 0008-6223, DOI: 10.1016/J.CARBON.2008.03.023 [retrieved on 2008-04-06]
- A J Franck: "Understanding Rheology of Thermosets Rheological Testing of Thermosetting Polymers General Considerations", , 1 January 2004 (2004-01-01), XP055134746, Retrieved from the Internet: URL:http://www.tainstruments.com/pdf/liter ature/AAN015_V1c_U_Thermoset.pdf [retrieved on 2014-08-14]

## Description

### [Technical field]

The present invention relates to a fiber reinforced composite material. The present invention relates to a prepreg useful to obtain a fiber reinforced composite material with excellent appearance quality, particularly in decorative surfaces, and also relates to a fiber reinforced composite material made thereof.

### [Background art]

High in heat resistance and corrosion resistance as well as mechanical properties such as strength and rigidity, in spite of being light in weight, fiber reinforced composite materials, which consist of a reinforcing fiber, such as carbon fiber and glass fiber, and a thermosetting resin, such as epoxy resin and phenolic resin, have been used in a wide variety of fields including aerospace, automobiles, railway vehicles, ships, civil engineering and construction, and sports goods. In recent years, in addition to these good mechanical properties, carbon fiber reinforced composite materials, for example, have good electromagnetic wave shielding properties while the carbon fiber maintains electric conductivity, and they have come into use as, for example, thin wall housing of electronic or electric devices such as laptop computers and video cameras, thus serving for reduction of their weight. Conventionally, these fiber reinforced composite materials are commonly produced by impregnating reinforcing fibers with a thermosetting resin to prepare prepreg sheets and then laminating and curing them into a molded product.

Conventional fiber reinforced composite materials, such as those molded by stacking so-called unidirectional carbon fiber prepreg sheets composed of unidirectionally paralleled carbon fibers impregnated with matrix resin, tend to suffer from partial fluctuations in position of carbon fiber bundles or twists of partially assembled carbon fiber single yarns in carbon fiber bundles that take place on the surface of the fiber reinforced composite materials. Some moldings of such fiber reinforced composite materials have been shunned because of these fluctuations and twists, in addition to other disturbances in fiber orientation, causing variations in appearance depending on the incident angle of light on the surface of a molded product, leading to offensive appearance properties such as those called blebs, glare, or fluctuations.

Coating or other treatments have been provided on the surface of molded products to avoid such appearance irregularities, but they tend to lead to a problem of an increase in weight. In the fields of housing of electronic or electric devices, there have been increased cases where surface texture attributed to carbon fibers is used effectively as a design feature of products. Accordingly, even when a product is coated, transparent or translucent coatings tend to be used frequently to highlight the internal feature, which also requires improved appearance quality as an important feature.

As a method of improving physical properties and appearance quality of fiber reinforced composite materials, patent document 1, for example, has disclosed a technique, but it cannot serve to solve the problem of deterioration in appearance quality caused by partial fluctuations in position of carbon fiber bundles or twists of partially assembled carbon fiber single yarns in carbon fiber bundles. In addition, patent document 2 proposes a method in which the surface of a molded product is concealed with a glass scrim cloth, and patent document 3 proposes a method in which gel coat is applied and cured in advance over the surface of the mold, followed by forming a reinforced composite material in the mold and causing the gel coat layer to be transferred to the surface of the molded product with the aim of obscuring the appearance irregularities, but these methods do not work effectively and have the problem of large molding cost.

### [Prior art documents]

### [Patent documents]

[Patent document 1] Japanese Unexamined Patent Publication (Kokai) No. 2004-99814
[Patent document 2] U.S. Pre-Grant Publication No. 2009-0110872
[Patent document 3] Japanese Unexamined Patent Publication (Kokai) No. 2003-48263

US 6,596,373 describes an epoxy resin composition for a fibre reinforced composite material, which is thermosetting resin composition where the glass transition temperature Tg of the cured material obtained by heating for 2 hours at 180°C is at least 150°C, and the modulus of rigidity G'*_{R}* in the rubbery plateau in the temperature region above the aforesaid Tg is no more than 10 MPa.

EP 0 564 235 describes a prepreg comprising [A]: reinforcing fibers; [B]: a resin composition including a thermosetting resin and a thermoplastics resin which is soluble in the thermosetting resin, which resin composition is capable of forming a micro-phase separation structure; and [C]: fine particles which are insoluble in the element [B] and which do not contain an elastomer component; the element [C] being localized in a surface region of the prepreg.

EP 0 420 665 describes a prepreg prepared by mixing continuous fibers as reinforcement into a matrix consisting of by weight: (a) 100 parts of a synthetic resin, preferably an epoxy, phenolic, unsaturated polyester or polyimide resin, (b) 5 to 50 parts of a flaky colorant of average particle size 70 to 300 µm and (c) 2 to 50 parts of a pigment of average size less than 70 µm and capable of hiding the color of the fibers substantially completely. The resin can be dissolved in a solvent or melted prior to mixing with the fibers, or dry mixed.

US 4,957,801 describes prepregs of fiber-reinforced thermosetting resin that have a coating comprising thermoplastic particles on one or both outer surfaces. Upon lamination of the prepregs into a composite, the layer comprising thermoplastic particles at the surface of the prepreg is formed into a discrete resin layer in the composite at the interface between fiber-reinforced thermosetting resin layers.

US 2010/009149 describes a composite sheet obtained by curing a composite composition comprising a glass filler and a transparent resin composition that includes an alicyclic epoxy resin [Formula 1 or Formula 2 below]; at least one type of compound other than the alicyclic epoxy resin having a cationic-polymerizable functional group; and a curing agent; wherein the admixture ratio of the alicyclic epoxy resin and the compound having a cationic-polymerizable functional group is preferably 99:1 to 70:30.

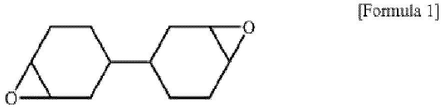

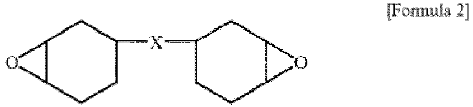

### [Summary of the invention]

### [Problems to be solved by the invention]

Although various efforts have been made at improving the appearance quality of fiber reinforced composite materials as described above, it is still difficult to achieve at low cost a high appearance quality required in the field of housing of electronic and electrical equipment, and the resolution of these problems has been desired.

In view of these conventional techniques as background, an object of the present invention is to provide a prepreg serving to reduce the unevenness in appearance of decorative surfaces of fiber reinforced composite materials and serving to produce fiber reinforced composite materials with excellent appearance.

### [Means of solving the problems]

The present invention adopts the following means to solve the problem. Specifically, it provides a prepreg comprising components [A] to [E] specified below, in which the region occupying 10% of the average thickness of the prepreg measured from each surface of the prepreg comprises components [B] to [E], and components [B] to [D] meet the following requirement (I):
[A]: reinforcement fiber,
[B]: an epoxy resin having two or more epoxy groups per molecule,
[C]: a compound capable of curing component [B],
[D]: crosslinked resin particles with an refractive index in the range of 1.49 to 1.61, and [E]: carbon black;
requirement (I): the refractive index, no, of a cured epoxy resin produced by curing a resin composition comprising component [B] and component [C], and the refractive index, n₁, of component [D] have the following relationship: 0.92 ≤ n₁/n₀ ≤ 1.05; wherein component [E] accounts for 1-5 parts by mass per 100 parts by mass of component [B].

According to a preferred embodiment of the prepreg according to the present invention, 85 wt% or more of the total quantity of component [D] is present in the region occupying 20% of the average thickness of the prepreg measured from each surface of the prepreg. According to a more preferred embodiment, the prepreg further comprises component [F] as described below in addition to components [A] to [E] as described above, and components [B] to [F] meet requirement (II) as described below:
[F]: a thermoplastic resin meeting requirement (i) described below:
   requirement (i): a resin composition prepared by adding component [F] to component [B] and heating them for 30 minutes at a temperature of 160°C does not contain solid fragments of component [F] with a size of 0.1 µm or more;
   requirement (II): the refractive index, n₀', of a cured epoxy resin produced by curing a resin composition comprising components [B], [C], and [F], and the refractive index, n₁, of component [D] have the following relationship: 0.92 ≤ n₁/n₀' ≤ 1.05.

### [Effect of the invention]

Fiber reinforced composite materials obtained by stacking and curing sheets of the prepreg according to the present invention have good design characteristics including excellent appearance quality free of fluctuations or glare attributable to fiber disarrangement that can cause deterioration in appearance quality. In particular, it is possible to obtain a fiber reinforced composite material having excellent appearance quality that may cause little offensiveness attributable to variations in appearance depending on the incident angle of light on the surface of molded products. The prepreg of the present invention can be suitably used for producing housing of electronic or electric instruments and serve to largely enhance the commercial value of products having the housing.

### [Description of embodiments]

The present invention is described in detail below based on embodiments.
The prepreg according to the present invention comprises at least components [A] to [E] described below:
[A]: reinforcement fiber,
[B]: an epoxy resin having two or more epoxy groups per molecule,
[C]: a compound capable of curing component [B],
[D]: crosslinked resin particles with an refractive index in the range of 1.49 to 1.61, and [E]: carbon black.

As the reinforcement fiber that works as component [A] of the present invention, it is favorable to use a reinforcement fiber selected from the group consisting of glass fiber, aramid fiber, polyethylene fiber, and carbon fiber. In particular, carbon fiber is used favorably in the field of housing of electronic and electrical equipment, because carbon fiber has electric conductivity while reinforced composite materials made thereof can have good electromagnetic wave shielding properties as well as good design characteristics based on the black color of the carbon fiber.

Carbon fibers have a tensile modulus of about 150 to 1,000 GPa. The use of carbon fiber, which has a high tensile modulus, leads to a fiber reinforced composite material with a high modulus. When used for housing of electric and electronic components, which is required to have thin walls and light weight, and accordingly high rigidity, it preferably has a tensile modulus of 200 to 800 GPa. The tensile modulus of carbon fiber referred to herein means a strand tensile modulus as measured according to JIS R7601 (1986).

Carbon fibers are classified into different categories such as polyacrylonitrile based carbon fibers, rayon based carbon fibers, and pitch based carbon fibers. Of these, polyacrylonitrile based carbon fibers with high tensile strength are used favorably. A polyacrylonitrile based carbon fiber may be produced through, for example, a process as described below. A spinning solution that contains polyacrylonitrile produced from monomers forme of acrylonitrile as primary component is spun by wet spinning, dry-wet spinning, dry spinning, or melt spinning. To produce carbon fiber, the coagulated thread resulting from this spinning is subjected to a yarn-making step to provide a precursor, which is then subjected to subsequent steps such as flameproofing and carbonization.

Commercial products of carbon fiber include Torayca (registered trademark) T700SC-12000 (tensile strength: 4.9 GPa, tensile modulus: 230 GPa), Torayca (registered trademark) T800HB-12000 (tensile strength: 5.5 GPa, tensile modulus: 294 GPa), Torayca (registered trademark) T800SC-24000 (tensile strength: 5.9 GPa, tensile modulus: 294 GPa), Torayca (registered trademark) M40JB-12000 (tensile strength: 4.4 GPa, tensile modulus: 377 GPa), and Torayca (registered trademark) M60JB-6000 (tensile strength: 3.8 GPa, tensile modulus: 588 GPa) (all these were supplied by Toray Industries, Inc.).

The reinforcement fibers for use in the prepreg according to the present invention may be in the form of, for example, long fiber paralleled unidirectionally, bidirectional woven fabric, multiaxial fabric, nonwoven fabric, mat, knit, or braid, though not limited thereto. Long fibers as referred to herein are monofilaments or fiber bundles that are substantially continuous over lengths of 10 mm or more.

So-called unidirectional prepregs, which are formed of long fibers paralleled unidirectionally, are high in strength utilization rate because fibers are aligned in one direction without significant bending of fibers. Furthermore, unidirectional prepregs may be used favorably because a fiber reinforced composite material whose strength and modulus can be controlled flexibly in different directions can be produced by molding multiple prepreg sheets stacked in an appropriate configuration.

Fabric prepregs formed of various woven fabrics are also preferred because they serve to produce materials that are free of significant anisotropy in strength and modulus and have excellent design characteristics with fiber fabric patterns showing up in the surface. It is also possible to combine different types of prepregs, such as unidirectional prepreg and fabric prepreg, to mold a fiber reinforced composite material.

When using carbon fiber as the reinforcement fiber for the present invention the content by mass of the carbon fiber (hereinafter referred to as Wf) relative to the total mass of the prepreg is preferably in the range of 50 to 90 mass%, more preferably in the range of 60 to 80 mass%. If Wf is less than 50% by mass, the amount of the epoxy resin composition, which is the matrix resin, is too large in some cases, and the resulting carbon fiber reinforced composite material will fail to have required characteristics including specific strength and specific modulus. If Wf is more than 90 mass%, on the other hand, the adhesion strength between the matrix resin and the carbon fiber will decrease significantly in some cases, possibly leading to unsuccessful adhesion between prepreg layers in a stacked prepreg and separation of these layers in the resulting carbon fiber reinforced composite material. Here, Wf means a fiber content by mass as measured in accordance with JIS K7071 (1988).

Component [B] for the present invention is an epoxy resin having two or more epoxy groups per molecule. The use of an epoxy resin having less than two epoxy groups per molecule is not preferable because a cured product produced by heating and curing its mixture with a curing agent as described later will be low in glass transition temperature. Such epoxy resins include, for instance, bisphenol type epoxy resins such as bisphenol A type epoxy resin, bisphenol F type epoxy resin, bisphenol AD type epoxy resin, and bisphenol S type epoxy resin; brominated epoxy resins such as tetrabromobisphenol A diglycidyl ether; epoxy resins having a biphenyl backbone; epoxy resins having a naphthalene backbone; epoxy resins having a dicyclopentadiene backbone; novolac type epoxy resins such as phenol novolac type epoxy resin, and cresol novolac type epoxy resin; glycidyl amine type epoxy resins such as N,N,O-triglycidyl-m-aminophenol, N,N,O-triglycidyl-p-aminophenol, N,N,O-triglycidyl-4-amino-3-methyl phenol, N,N,N',N'-tetraglycidyl-4,4'-methylene dianiline, N,N,N',N'-tetraglycidyl-2,2'-diethyl-4,4'-methylene dianiline, N,N,N',N'-tetraglycidyl-m-xylylene diamine, N,N-diglycidyl aniline, and N,N-diglycidyl-o-toluidine; and others such as resorcin diglycidyl ether, and triglycidyl isocyanurate. For use as housing for electric and electronic instruments, in particular, it is preferable that a novolac type epoxy resin is contained because the resulting cured material will have high elastic modulus.

These epoxy resins may be used singly or in combination as appropriate. Combining a liquid epoxy resin showing fluidity at a temperature of 25°C with a solid epoxy resin showing no fluidity at a temperature of 25°C is effective for fluidity control of the matrix resin during thermal curing of the resulting prepreg. For example, if the matrix resin is highly flowable before its gelation during heat curing, disturbance in the orientation reinforcement fibers may take place, possibly resulting in a fiber reinforced composite material with deteriorated appearance quality. It is also useful for producing a prepreg with an appropriate tackiness and drapability.

The prepreg according to the present invention may appropriately contain an epoxy compound other than component [B], such as a mono-epoxy compound having only one epoxy group per molecule and alicyclic epoxy resin, unless it causes a significant decrease in heat resistance or mechanical properties.

Compounds that can serve as component [C] which is capable of curing the epoxy resin of component [B] (hereinafter referred to as curing agents) include, for example, compounds that undergo a stoichiometric reaction such as aliphatic polyamine, aromatic polyamine, dicyandiamide, polycarboxylic acid, polycarboxylic acid hydrazide, acid anhydride, polymercaptan, and polyphenol; and those that act catalytically such as imidazole, Lewis acid complex, and onium salt. In some cases, a compound that undergoes a stoichiometric reaction may further be used in combination with a curing accelerator such as imidazole, Lewis acid complex, onium salt, urea derivative, and phosphine. Of these curing agents, preferable ones include organic nitrogen compounds that contain a nitrogen atom in the molecule such as amino group, amide group, imidazole group, urea group, and hydrazide group because the resulting fiber reinforced composite materials will have high heat resistance and mechanical properties.

Such organic nitrogen compounds that serve as curing agents include, for instance, aromatic amines, aliphatic amines, tertiary amines, secondary amines, various imidazoles, urea derivatives, carboxylic acid hydrazides, Lewis acid complexes of nitrogen-containing compounds, dicyandiamides, and tetramethyl guanidines.

Such aromatic amines include, for instance, 3,3'-diisopropyl-4,4'-diaminodiphenyl methane, 3,3'-di-t-butyl-4,4'-diaminodiphenyl methane, 3,3'-diethyl-5,5'-dimethyl-4,4'-diaminodiphenyl methane, 3,3'-diisopropyl-5,5'-dimethyl-4,4'-diaminodiphenyl methane, 3,3'-di-t-butyl-5,5'-dimethyl-4,4'-diaminodiphenyl methane, 3,3',5,5'-tetraethyl-4,4'-diaminodiphenyl methane, 3,3'-diisopropyl-5,5'-diethyl-4,4'-diaminodiphenyl methane, 3,3'-di-t-butyl-5,5'-diethyl-4,4'-diaminodiphenyl methane, 3,3',5,5'-tetraisopropyl-4,4'-diaminodiphenyl methane, 3,3'-di-t-butyl-5,5'-diisopropyl-4,4'-diaminodiphenyl methane, 3,3',5,5'-tetra-t-butyl-4,4'-diaminodiphenyl methane, 4,4'-diaminodiphenyl methane, 4,4'-diaminodiphenyl sulfone, 3,3'-diaminodiphenyl sulfone, m-phenylene diamine, m-xylylene diamine, and diethyl toluene diamine.

Such aliphatic amines include diethylene triamine, triethylene tetramine, isophorone diamine, bis(aminomethyl) norbornane, bis(4-aminocyclohexyl) methane, dimer acid ester of polyethylene imine. They further include modified amines produced by reacting an amine having an active hydrogen, such as aromatic amine and aliphatic amine, with a compound such as an epoxy compound, acrylonitrile, phenol, formaldehyde, and thiourea.

Such tertiary amines include N,N-dimethyl piperazine, N,N-dimethyl aniline, triethylene diamine, N,N-dimethyl benzyl amine, 2-(dimethyl aminomethyl) phenol, and 2,4,6-tris-(dimethyl aminomethyl) phenol.

Such secondary amines include piperidine.

Such various imidazoles include 2-methyl imidazole, 2-ethyl-4-methyl imidazole, 2-undecyl imidazole, 2-heptadecyl imidazole, 1,2-dimethyl imidazole, 2-phenyl imidazole, 2-phenyl-4-methyl imidazole, and 1-benzyl-2-phenyl imidazole.

Such urea derivatives include 3-phenyl-1,1-dimethyl urea, 3-(3,4-dichlorophenyl)-1,1-dimethyl urea (DCMU), 3-(3-chloro-4-methyl phenyl)-1,1-dimethyl urea, 4,4'-methylene bis(diphenyl dimethylurea), and 2,4-toluene bis(3,3-dimethylurea).

Such carboxylic acid hydrazides include adipic acid hydrazide and naphthalene carboxylic acid hydrazide.

Such Lewis acid complexes of nitrogen-containing compounds include boron trifluoride / piperidine complexes, boron trifluoride / monoethyl amine complexes, boron trifluoride / triethanol amine complexes, and boron trichloride / octyl amine complexes.

Component [C] preferably has thermal activation type latency to ensure stability at the resin preparation step, storage stability at room temperature, and stability against heat history that takes place in the step for impregnating reinforcement fibers with an epoxy resin composition. Thermal activation type latency as referred to herein means the tendency to convert into a high activity state from an ordinary, low activity state when undergoing phase change, chemical change, or the like caused by a certain degree of heat history.

Of the organic nitrogen compounds serving as curing agents, dicyandiamides has been preferred as compounds having thermal activation type latency. Dicyandiamides are characterized in being dispersed in the form of particles and showing little reactivity in an epoxy resin component, instead of dissolving in the epoxy resin component, at a temperature of 25°C and normally becoming soluble in an epoxy resin when heated up to 180°C or more to react with the epoxy group.

Preferable curing agents having thermal activation type latency also include amine duct type latent curing agents and microcapsule type latent curing agents. An amine duct type latent curing agent as referred to herein can be produced by reacting the active component of a compound containing a primary, secondary or tertiary amino group or one of various imidazole compounds with a compound that can react with the former compounds so that they form a polymer that is insoluble at storage temperatures. A microcapsule type latent curing agent as referred to herein consists of a curing agent as core covered with a polymer substance, such as epoxy resin, polyurethane resin, polystyrene, and polyimide, or cyclodextrin as shell to decrease the contact between the epoxy resin and the curing agent.

Component [C] may be a single compound or a combination of a plurality of compounds.
For instance, a combination of a dicyandiamide with a urea derivative or imidazole can be used favorably. A single dicyandiamide requires a temperature of about 170 to 180°C to perform curing, but an epoxy resin composition for fiber reinforced composite material production that contains such a combination will be able to cure at a temperature of 80 to 150°C.

Furthermore, aromatic amines such as 4,4'-diaminodiphenyl sulfone and 3,3'-diaminodiphenyl sulfone may be combined favorably with a Lewis acid such as boron trifluoride ethylamine complex with the aim of promoting the curing step. An amine duct type latent curing agent can be used favorably in combination with a carboxylic acid dihydrazide such as adipic acid dihydrazide with the aim of promoting the curing step.

Of those listed above, a combination of a dicyandiamide with a compound having two or more urea bonds per molecule is preferable particularly in terms of curability and stability. Preferable examples of the compound having two or more urea bonds per molecule include 4,4'-methylene bis(diphenyl dimethylurea) and 2,4-toluene bis(3,3-dimethylurea). Epoxy resin compositions for fiber reinforced composite material production that contain these compounds can cure in 2 to 30 minutes at a temperature of 140 to 160°C.

The crosslinked resin particles used as component [D] for the present invention are selectively localized in the region that occupies 10% of the average thickness of the prepreg from each surface of the prepreg and serve as a spacer layer so as to form a surface layer formed of matrix resin that does not contain component [A]. If a matrix resin layer that does not contain component [A] exists at the surface, the prepreg surface will suffer from irregularities attributed to component [A], resulting in diffuse reflection of light at the surface. Existence of a component [A]-free matrix resin layer at the surface of the prepreg serves to suppress irregularities on the surface of the prepreg and accordingly prevent deterioration in appearance quality from being caused by diffuse reflection of light. To improve the appearance quality, component [D] works to control the refractive index and light transmittance in the matrix resin layer so as to prevent offensive appearance from being caused by variations in appearance depending on the incident angle of light as a result of partial positional fluctuations and twists of bundles of the reinforcement fiber, i.e., component [A].

These crosslinked resin particles preferably have a refractive index in the range of 1.49 to 1.61, more preferably 1.52 to 1.6, and still more preferably 1.55 to 1.59. A refractive index outside this range is not preferable because in that case, the difference in the refractive index between the crosslinked resin particles and cured material of a resin composition that is composed of other components will be significantly large, leading to a smaller effect for suppressing offensive appearance properties. Here, the refractive index crosslinked resin particles is as measured by the Becke line technique described in JIS K 7142 (1996), and the refractive index of cured material of a resin composition that is composed of other components is as measured by the technique using the Abbe refractometer described in JIS K 7142 (1996).

To control the refractive index of the crosslinked resin particles of component [D] in an appropriate range, it is preferable for the aforementioned particles to be of at least one material selected from the group of epoxy resin, polystyrene, and polyurethane. Of these, polystyrene and polyurethane are particularly preferred.

Furthermore, these crosslinked resin particles have molecular structures with three dimensional network backbones. The crosslinked resin particles preferably have a volume average particle diameter in the range of 10 to 60 µm, more preferably in the range of 11 to 55 µm, and still more preferably in the range of 12 to 50 µm. A volume average particle diameter of 10 µm or more enhances the aforementioned spacer effect. A volume average particle diameter of 60 µm or less serves to maintain the thickness of the matrix resin layer at the prepreg surface in an appropriate range and also maintain the mass content of the reinforcement fiber at 50 mass% or more of the total mass of the prepreg, accordingly allowing the resulting fiber reinforced composite material to have required characteristics. In addition, the crosslinked resin particles preferably have a perfect spherical shape to ensure smoothness of the matrix resin layer at the prepreg surface and suppress diffuse reflection of light at the prepreg surface due to irregularities on the surface. Here, the volume average particle diameter is as measured by a laser diffraction and scattering particle size distribution measuring apparatus according to JIS Z8825-1 (2001).

Furthermore, it is preferable for the crosslinked resin particles of component [D] to remain solid with an average particle diameter of 10 to 60 µm, rather than dissolving in the other components, even after being mixed with component [B], component [C], and component [E], which will be described later, along with component [F] if necessary, and heated for an appropriate period of time in the range of 1 to 30 minutes under the heating and curing conditions for the prepreg of the present invention, specifically in the range of 80 to 220°C. The crosslinked resin particles can have the aforementioned spacer effect as they remain undissolved in the other components. Here, the average particle diameter of component [D] in the mixture was determined by measuring the particle diameter of 100 arbitrarily selected particles with a transmission type optical microscope at a magnification of x5 and averaging the measurements.

Commercially available products of crosslinked resin particles include, for instance, Toraypearl (registered trademark) (fine epoxy particles, supplied by Toray Industries, Inc.), Techpolymer (registered trademark) SBX-12 (styrene-divinylbenzene copolymer, supplied by Sekisui Plastics Co., Ltd.), Chemisnow (registered trademark) SGP-150C (styrene-divinylbenzene copolymer, supplied by Soken Chemical & Engineering Co., Ltd.), and Daimic Beads (registered trademark) UCN-5051D (crosslinked polyurethane, supplied by Dainichiseika Colour & Chemicals Mfg. Co., Ltd.).

The amount of component [D] to be added is preferably in the range of 10 to 70 parts by mass, more preferably in the range of 13 to 60 parts by mass, and still more preferably 16 to 50 parts by mass, relative to 100 parts by mass of component [B]. If it is maintained in the above range, a matrix resin layer can be formed on the surface of the resulting fiber reinforced composite material to ensure improved appearance quality without impairing the tackiness and drape property of the prepreg.

The carbon black of component [E] is added with the aim of controlling the optical transparency. The volume average particle diameter of the carbon black is preferably in the range of 1 to 80 nm, more preferably in the range of 10 to 60 nm, and still more preferably in the range of 20 to 40 nm. Here, the volume average particle diameter can be measured by using a Nanotrac particle size distribution measuring apparatus (supplied by Nikkiso Co., Ltd.). Carbon black with a volume average particle diameter of less than 1 nm is difficult to produce. If the carbon black used is too large in volume average particle diameter, the carbon black may be filtered out by the reinforcement fiber in some cases, possibly leading to an nonuniform dispersed state, in the step for impregnating the reinforcement fiber with the matrix resin in the prepreg production process. Accordingly, a volume average particle diameter of carbon black is preferable because in that case, it can work in a small blending quantity to control the optical transparency while ensuring a uniform dispersed state in the resulting fiber reinforced composite material.

The amount of the carbon black to be added is in the range of 1 to 5 parts by mass, preferably in the range of 1 to 4 parts by mass, and more preferably 1 to 2 parts by mass, relative to 100 parts by mass of component [B]. If it is in this range, the design characteristics of the reinforcement fiber can work effectively, and the appearance quality can be further improved by optimizing the optical transparency of the matrix resin, particularly that of the matrix resin layer formed on the surface of the fiber reinforced composite material.

Commercially available products of carbon black include Mitsubishi (registered trademark) Carbon Black RCF#10 (volume average particle diameter 75 nm), RCF#40 (volume average particle diameter 24 nm), MCF#990 (volume average particle diameter 16 nm) (all supplied by Mitsubishi Chemical Corporation), Sunblack (registered trademark) SB900 (volume average particle diameter 15 nm), SB320 (volume average particle diameter 20 nm) (all supplied by Asahi Carbon Co., Ltd.), and Carbon ECP (volume average particle diameter 39 nm, Lion Corporation).

Component [F], i.e., a thermoplastic resin serving favorably for the present invention, is added with the aim of controlling the tackiness of the resulting prepreg and controlling the flowability of the matrix resin during the heat-curing of the prepreg. To this end, the thermoplastic resin of component [F] necessarily has a high compatibility with component [B] and meets the following requirements. Specifically, component [B] should contain component [F], and a resin composition produced by heating them at a temperature of 160°C for 30 minutes should not contain solid fragments of component [F] with a size of 0.1 µm or more. Here, the verification of solid fragments is performed by observation using a transmission type optical microscope at a magnification of x5. The use of a thermoplastic resin that meets the aforementioned requirements is preferable because in that case, solubility changes will not be caused easily by fluctuations in the preparation temperature during the matrix resin preparation process, thus serving to ensure a stable resin viscosity and accordingly obtain a prepreg with a stable tackiness.

Here, the tackiness of the prepreg was measured using a tackiness tester (PICMA Tackiness Tester II, supplied by Toyo Seiki Co., Ltd.), in which a cover glass of 18 × 18 mm was pressed against the prepreg for 5 seconds under a force of 3.9 N and pulled at a speed of 30 mm/min to determine the resistance against the removal of the cover glass, which was used to calculate the tackiness. Of seven measurements made (n = 7), the largest and smallest ones were excluded, and the tackiness was calculated by averaging the remaining five measurements. The tackiness is preferably in the range of 5.9 N or more and less than 19.6 N, more preferably in the range of 6.9 N or more and less than 17.6 N.

Such thermoplastic resins include, for instance, polymethyl methacrylate, polyvinyl formal, polyvinyl butyral, polyvinyl acetal, polyvinyl pyrolidone, polymers containing as a constituent at least one selected from the group consisting of aromatic vinyl monomer, vinyl cyanide monomer, and rubber-like polymer, polyarylene oxide, polysulfone, polyethersulfone, polyether ether sulfone, polyimide, polyetherimide, and phenoxy resin. Of these, polyvinyl formal has been used favorably because of having a high compatibility with component [B] and capable of controlling effectively the flowability of the resulting mixture.

The amount of the thermoplastic resin of component [F] to be added is preferably in the range of 1 to 10 parts by mass, more preferably in the range of 1 to 8 parts by mass, and still more preferably 2 to 5 parts by mass, relative to 100 parts by mass of component [B]. A blending quantity of the thermoplastic resin controlled in this range ensures a good balance among the viscosity of the mixture, tackiness of the resulting prepreg, and the mechanical properties of the resulting fiber reinforced composite material.

A variety of generally known methods are available to serve for producing a matrix resin composition including components [B] to [E], along with component [F] if necessary, (hereinafter simply referred to as epoxy resin composition) to be used for the present invention. For example, the use of a kneader for kneading the various components can be quoted. A twin screw extruder may be used for kneading the various components.

When producing an epoxy resin composition using a kneader, component [B] and component [E], along with component [F] if necessary, are first heated and mixed in the temperature range of 130 to 160°C. When component [F] is added here, it is preferable that the mixture be free of solid fragments of component [F] with a size of 0.1 µm or more. Component [E] is preferably dispersed so that the volume average particle diameter is 200 nm or less, more preferably less than 190 nm. The lower limit of the volume average particle diameter is equal to the primary particle diameter of the carbon black used as component [E]. Here, the volume average particle diameter of component [E] in a dispersed state can be measured by using a Nanotrac particle size distribution measuring apparatus (supplied by Nikkiso Co., Ltd.). A volume average particle diameter of 200 nm or less permits the production of a fiber reinforced composite material having high appearance quality free of color unevenness. In many cases, the carbon black serving as component [E] is in a coagulated form, and therefore, if all components are kneaded together at a time, adequate dispersion may not be achieved. In such cases, a master batch containing part of component [B] and component [E] may be prepared in advance. A variety of generally known production methods are available for producing a master batch. Such methods include, for instance, stirring by means of a ball mill, homomixer, homogenizer, or ultrasonic device.

Component [B] and component [E], along with component [F] if necessary, are heated and mixed, and then cooled to a temperature range of 40 to 60°C, followed by adding component [C] and component [D] and further kneading them. If dicyandiamide is used as component [C], it is added and dispersed in a solid form in the mixture of the other components. If all components are kneaded together at a time, dicyandiamide are coagulated to cause insufficient dispersion in some cases. The use of an epoxy resin composition with poor dispersion is not preferable because in that case, the resulting cured material may suffer from uneven properties or insufficient curing. Therefore, dicyandiamide is preferably used as a master batch, subjected to preliminary kneading with part of component [B] in a triple roll mill.

For an epoxy resin composition composed of components [B] to [E], along with component [F] if necessary, the blending quantity of each component, if in an uncured state, can be determined by using a combination of various analysis methods such as infrared absorption analysis (abbreviated as IR), hydrogen-magnetic nuclear resonance (abbreviated as ¹H-NMR), carbon-13 magnetic nuclear resonance (abbreviated as ¹³C-NMR), gas chromatography mass spectroscopy analysis (abbreviated as GC-MS), and high performance liquid chromatography (abbreviated as HPLC). For instance, an epoxy resin composition may be dissolved in a single or mixed solvent of water, alcohols, acetonitrile, dichloromethane, or trifluoroacetic acid, and then filtered to remove impurities, and the supernatant liquid is analyzed by HPLC while the separated material is analyzed by IR. The aforementioned methods may serve to identify the components contained in the resin composition, and the epoxy equivalent of the epoxy resin component contained can be calculated from the information obtained concerning the molecular weight and the number of epoxy groups.

From the viewpoint of handleability and resin flow, the epoxy resin composition composed of components [B] to [E], along with component [F] if necessary, preferably has a complex viscosity in the range of 2 to 20 Pa·s, more preferably in the range of 3 to 18 Pa·s, at a temperature of 100°C. If the complex viscosity is less than 2 Pa·s at a temperature of 100°C, excessive resin flows may take place during the molding process to drag reinforcement fibers, possibly resulting in variations in orientation and moldings with deteriorated appearance quality. If the complex viscosity is more than 200 Pa·s at a temperature of 100°C, on the other hand, thin spots may take place in the undermentioned step for producing film from the epoxy resin composition by the hot melt technique, and unimpregnated portions may be left in the step for impregnation with the reinforcement fiber. The complex viscosity at a temperature of 100°C was measured by using a dynamic viscoelasticity measuring machine (ARES-2KFRTN1-FCO-STD, supplied by TA Instruments) along with flat parallel plates with a diameter of 40 mm installed on the upper and lower measuring jigs. The epoxy resin composition was set between the upper and lower measuring jigs separated with a jig distance of 1 mm, and measurements were made in the twisting mode (measuring frequency 0.5 Hz) in the temperature range of 40 to 140°C at a heating rate of 1.5°C/min.

The complex viscosity of an epoxy resin composition at a temperature of 100°C can be controlled in the aforementioned range by, for example, mixing appropriate blending quantities of the solid epoxy resin component that is contained in component [B] and does not show flowability at a temperature of 25°C and the thermoplastic resin of component [F] that is added as required. In particular, the amount of component [F], which has large influence on the viscosity, is preferably in the range of 1 to 10 parts by mass, more preferably in the range of 1 to 8 parts by mass, and still more preferably 2 to 6 parts by mass, relative to 100 parts by mass of component [B], as described above.

Here, it is necessary for the various components used for the present invention to meet the following requirements. Specifically, the refractive index, n₀, of a cured epoxy resin produced by curing a resin composition comprising component [B] and component [C] and the refractive index, n₁, of component [D] should have the following relationship: 0.92 ≤ n₁/n₀ ≤ 1.05. It is preferable to meet the relationship: 0.94 ≤ n₁/n₀ ≤ 1.05.

In the case where component [F] is used for the present invention, the refractive index, n₀', of a cured epoxy resin produced by curing a resin composition comprising component [B], component [C], and component [F], and the refractive index, n₁, of component [D] have the following relationship: 0.92 ≤ n₁/n₀' ≤ 1.05. It is preferable to meet the relationship: 0.94 ≤ n₁/n₀' ≤ 1.05.

If the ratio between refractive index no and refractive index n₁ or the ratio between refractive index n₀' and refractive index n₁ is outside the ranges, the resulting cured material will be low in transparency leading to diffuse reflection of light. In that case, particularly severe diffuse reflection will take place at the positions of partial positional disturbances and twists of reinforcement fibers, leading to offensive deterioration in appearance quality in the form of blebs, glare, or fluctuations. If the ratio between refractive index n₀ and refractive index n₁ or the ratio between refractive index n₀' and refractive index n₁ is in these ranges, it is possible to suppress phenomena that reduce such appearance quality, leading to a fiber reinforced composite material with improved appearance quality.

The epoxy resin composition is employed to impregnate the reinforcement fiber of component [A] adopted for the present invention to produce a prepreg.

A variety of generally known production methods are available for producing the prepreg according to the present invention. For instance, an appropriate prepreg can be produced by the wet method in which an epoxy resin composition is dissolved in an organic solvent selected from the group of acetone, methyl ethyl ketone, and methanol to reduce its viscosity and used to impregnate reinforcement fibers or by the hot melt method in which an epoxy resin composition is heated to reduce its viscosity without using an organic solvent and used to impregnate reinforcement fibers.

With the wet method, reinforcement fibers may be immersed in a liquid containing an epoxy resin composition and after pulling it out, the organic solvent is evaporated in an apparatus such as oven to provide a prepreg.

The hot melt method can be carried out by a process in which an epoxy resin composition, heated to decrease its viscosity, is used to directly impregnate reinforcement fibers or by a process in which a resin film-coated release paper sheet (hereinafter, occasionally referred to simply as resin film) composed of release paper or the like coated with an epoxy resin composition is prepared first and the resin film-coated release paper sheet is attached to one or each surface of a reinforcement fiber sheet, with the resin film surface facing the reinforcement fiber sheet, followed by heating and pressurizing to allow the reinforcement fiber sheet to be impregnated with the epoxy resin composition.

For the production of the prepreg according to the present invention, the use of the hot melt method which can impregnate reinforcement fibers with an epoxy resin composition without using an organic solvent is preferable because the resulting prepreg is substantially free of organic solvent residue.

Hot melt method based processes for producing the prepreg according to the present invention include the following ones, any of which can be helpful for its production. Specifically, a first example is a so-called single stage impregnation hot melt process in which a resin film composed of components [B] to [E], along with component [F] if necessary, according to the present invention is attached to one or each surface of component [A] and then pressurized under heat to carry out impregnation with the epoxy resin composition in a single stage. A second example is a multiple stage impregnation hot melt process in which an epoxy resin composition is attached to one or each surface of component [A] and pressurized under heat in multiple stages to carry out impregnation. For the multiple stage impregnation hot melt process, there are no specific limitations on the number of multiple impregnation stages for impregnating component [A] with an epoxy resin composition composed of components [B] to [E], along with component [F] if necessary, but the required production cost increases with the number of impregnation stages. Therefore, it has been preferred to adopt the so-called two stage impregnation hot melt process in which an epoxy resin composition is applied to one or each surface of component [A] and pressurized under heat in two stages to carry out impregnation. A preferred process based on the two stage impregnation hot melt method consists of preparing a resin film 1 that is composed of components [B], [C], and [E], along with component [F] if necessary, but free of component [D], impregnating component [A] from one or each surface to provide a prepreg precursor, and applying a resin film 2 that is composed of components [B] to [E], along with component [F] if necessary, to one or each surface of the prepreg precursor to provide a prepreg.

When carrying out the single stage impregnation hot melt method, component [D] is disposed selectively near the surface of the prepreg as component [A] works to prevent the intrusion of the particles of component [D] during the step of impregnating component [A] with a resin film composed of components [B] to [E], along with component [F] if necessary, according to the present invention. However, it is difficult to stop component [D] completely, allowing part of component [D] to enter into the layer formed mainly of component [A].

When carrying out the two stage impregnation hot melt method, on the other hand, component [D] can be disposed selectively near the surface of the prepreg by first impregnating component [A] with an epoxy resin composition that is free of component [D] to prepare a prepreg precursor and then applying a component [D]-containing matrix resin to it. Accordingly, the prepreg prepared by the two stage impregnation hot melt method is rich in component [D] in the region that occupies 10% of the average thickness of the prepreg as measured by the method described later. In the prepreg according to the present invention, the crosslinked resin particles used as component [D] are selectively localized in the region that occupies 10% of the average thickness of the prepreg from each surface of the prepreg and serve as a spacer layer so that a matrix resin layer that prevents diffuse reflection of light will be formed on the surfaces of the resulting fiber reinforced composite material, leading to improved appearance quality. The use of the two stage impregnation hot melt method is preferable because a larger amount of component [D] can be disposed near the prepreg surface by the two stage impregnation hot melt method, making it possible to produce a fiber reinforced composite material with higher appearance quality.

To allow the prepreg produced by a prepreg production process according to the hot melt method to have handleability-related characteristics such as tackiness and drape property in a desirable range, the maximum temperature reached by the epoxy resin composition during the step of impregnating the reinforcement fiber with the epoxy resin composition is preferably in the temperature range of 60°C to 150°C, more preferably in the temperature range of 80°C to 130°C. If the maximum temperature reached by the epoxy resin composition is this range, it will be possible to suppress the curing reaction taking place in the epoxy resin composition and prevents the glass transition temperature in the uncured state from increasing, thus allowing the resulting prepreg to have an appropriate degree of tackiness and drape property.

The maximum temperature reached by the epoxy resin may be controlled, for instance, in the range of 50°C to 100°C while controlling the pressure, for instance, at less than 1 MPa in the step of applying a resin film composed of components [B] to [E], along with component [F] if necessary, to a prepreg precursor, thereby producing a prepreg rich in component [D] near the surface of the prepreg. Such a prepreg will serve to produce a fiber reinforced composite material with high appearance quality and good design characteristics. If the maximum temperature is more than 100°C, the epoxy resin will have an increased flowability and fail to produce a matrix resin layer having a sufficiently large thickness required to control the refractive index and light transmittance, leading to a fiber reinforced composite material with inferior appearance quality. If impregnation is performed at a pressure of more than 1 MPa, particles will penetrate into spaces among reinforcement fibers to prevent the production of a sufficiently thick matrix resin layer on the prepreg surface.

In the prepreg according to the present invention, the region that occupies 10% of the average thickness of the resulting prepreg from each surface of the prepreg is composed mainly of components [B] to [E]. Accordingly, the region that occupies 10% of the average thickness of the resulting prepreg from each surface of the prepreg does not contain component [A]. A prepreg having this structure allows the resulting fiber reinforced composite material to have a surface layer formed of matrix resin with a thickness of at least 10% of the average thickness of the prepreg. This matrix resin layer contains components [B] to [E] that work to control the refractive index and light transmittance, thereby serving to ensure high appearance quality and good design characteristic by preventing offensive appearance from being caused by variations in appearance depending on the incident angle of light on the surface of moldings as a result of partial positional fluctuations of bundles of the reinforcement fiber or twists of partially assembled single yams of reinforcement fiber in reinforcement fiber bundles. Here, the thickness of the matrix resin layer located at the prepreg surface can be evaluated as described below.

Specifically, the prepreg produced according to the present invention is sandwiched between two smooth support plates and, while maintaining close contact, they were heated by gradually increasing the temperature over a long period of time. In this step, it is important to cause gelation at as low a temperature as possible. If the temperature is raised before start of gelation, the resin will flow in the prepreg to prevent accurate evaluation for the thickness of the matrix resin layer, and therefore, the prepreg is cured into a fiber reinforced composite material by continuing gradual temperature increase for a long period of time after the gelation. A cross section of the resulting fiber reinforced composite material is polished and photographed by an epi-illumination type optical microscope at a magnification of x200. First, this photograph of a cross section is used to determine the average thickness of the prepreg. For one prepreg sheet, the average thickness is measured at five or more positions arbitrarily selected on a photograph, and the average of the measurements is calculated. Then, the thickness of the matrix resin layer formed on the surface of the fiber reinforced composite material is determined. The thickness of the matrix resin layer is also measured at five or more arbitrarily selected positions, and the average of the measurements is calculated. From the average thickness of the prepreg and the average thickness of the matrix resin layer thus obtained, their ratio can be calculated.

When component [F] is used for the present invention, furthermore, the region that occupies 10% of the average thickness of the resulting prepreg from each surface of the prepreg is preferably composed of components [B] to [F]. The existence of component [F] in the matrix resin layer makes it possible to control the tackiness of the resulting prepreg and control the flowability of the matrix resin during the heat-curing of the prepreg. In particular, the control of the flowability of the matrix resin during the heat-curing of the prepreg serves to secure the matrix resin layer formed on the prepreg surface and suppress the splitting of fibers by forming resin-rich portions filled with the matrix resin flowing through fibers.

It is also preferable that in the prepreg according to the present invention, 85 mass% or more of the total quantity of component [D] be present in the region that occupies 20% of the average thickness of the resulting prepreg from each surface of the prepreg. Thus, component [D] is preferably localized near the surface of the prepreg. In a prepreg of this structure, component [D] can act effectively as a spacer layer to allow a matrix resin layer to be formed stably on the surface of the resulting fiber reinforced composite material. Here, the degree of the localization of the particles in the prepreg can be evaluated as described below. Specifically, after obtaining a fiber reinforced composite material according to the aforementioned method, a cross section thereof is polished and photographed by an epi-illumination type optical microscope at a magnification of x200. This photograph of a cross section is used to determine the average thickness of the prepreg. For one prepreg sheet, the average thickness is measured at five or more positions arbitrarily selected on a photograph, and the average of the measurements is calculated. Then, a line parallel to the directions of the prepreg is drawn at a position corresponding to 20% of the thickness of the prepreg from the surface in contact with each support plate. For each surface of the prepreg, the total cross-sectional area of the particles existing between the surface in contact with each support plate and the 20% parallel line is determined. The total cross-sectional area of the particles existing over the entire width of the prepreg is also determined. The ratio of the total cross-sectional area of the particles existing in the region that occupies 20% of the average thickness from each surface of the prepreg to the total cross-sectional area of the particles existing over the entire width of the prepreg is assumed to represent the quantity of particles existing within 20% of the average thickness of the prepreg from each surface of the prepreg. The determination of the cross-sectional area of the particles may be carried out by using an analyzer or by cutting out all the particle portions contained in the aforementioned regions in the photograph and measuring their weight. To eliminate the influence of the partial variation in particle distribution, this evaluation should cover the entire width of the photograph and the same evaluation procedure should be performed for photographs taken at arbitrarily-selected five or more positions, followed by calculation of the average. If it is difficult to distinguish between particles and the matrix resin, either of them may be dyed selectively for easy observation. The microscope to be used may be either an optical microscope or a scanning electron microscope, and a suitable one may be used depending on the particle size and the dyeing method used. For the present invention, the ratio in area calculated as described above is assumed to represent the ratio in mass of the fine particles existing in the region that occupies 20% of the average thickness of the prepreg from each surface of the prepreg.

A fiber reinforced composite material can be obtained by curing the prepreg according to the present invention. A variety of generally known methods are available for molding a prepreg to form a fiber reinforced composite material. In a preferred method, for instance, prepreg sheets obtained are cut to a predetermined size, and each thereof or a stack thereof is heat-cured under a pressure.

Techniques available for heat-curing a prepreg stack under a pressure include press molding, autoclave molding, bagging molding, wrapping tape molding, and internal pressure molding. Of these, press molding has been preferred because of small equipment cost, simple operation, high molding speed, and suitability for mass production.

The molding temperature for production of a fiber reinforced composite material is normally in the temperature range of 80 to 220°C, although some adjustments may be required depending on the type of the curing agent contained in the epoxy resin composition. If the molding temperature is too low, an adequately high curing rate may not be achieved in some cases, whereas if it is too high, on the other hand, warp may be caused by heat strain in some cases.

When a fiber reinforced composite material is produced by press molding, the molding pressure is normally in the pressure range of 0.1 to 5 MPa depending on the thickness, Wf, or the like of the prepreg. A molding pressure in this range allows the resulting fiber reinforced composite material to be free of defects such as voids and makes it possible to produce a fiber reinforced composite material free of warp or other size variations.

With respect to the appearance of moldings, a conclusive appearance evaluation still depends on visual observation in many cases although recent development of high-function software has brought about widespread use of equipment for appearance evaluation.

With high appearance quality, fiber reinforced composite materials produced from the prepreg according to the present invention can be used favorably for outside plates of automobiles and the like, sports/leisure goods, and housing of electronic/electric devices. In particular, they can be used favorably for housing of electronic/electric devices.

### Examples

The prepreg and carbon fiber composite materials according to the present invention are described in more detail below with reference to Examples. The various components used in Examples and the preparation procedure for epoxy resin compositions are respectively described in sections (1) and (2) given below. The prepreg preparation methods and the fiber reinforced composite material production procedures used are respectively described in sections (3) and (4) given below. For Examples, various characteristics (physical properties) were determined by the methods described in sections (5) to (11) given below. Determination of these physical properties was performed in an environment with a temperature of 23°C and relative humidity of 50% unless otherwise specified.

### (1) Various components

### < reinforcement fiber (component [A]) >

∘ carbon fiber (Torayca (registered trademark) T700SC-12K, tensile strength 4.9 GPa, tensile modulus 230 GPa, supplied by Toray Industries, Inc.)

### < epoxy resin (component [B]) >

∘ liquid bisphenol A type epoxy resin (Epotohto (registered trademark) YD 128, supplied by Nippon Steel Chemical Co., Ltd.)
∘ solid bisphenol A type epoxy resin (jER (registered trademark) 1001, supplied by Mitsubishi Chemical Corporation)
∘ phenol novolac type epoxy resin (jER (registered trademark) 154, supplied by Mitsubishi Chemical Corporation)

### < curing agent (component [C]) >

∘ dicyandiamide (Dicy7, supplied by Mitsubishi Chemical Corporation)
∘ urea compound (Omicure (registered trademark) 24, supplied by CVC Specialty Chemicals, Inc.)
∘ 3,3'-diaminodiphenyl sulfone (3,3'-DAS, Konishi Chemical Ind. Co., Ltd.)
∘ a mixture of methyl hexahydrophthalic anhydride and hexahydrophthalic anhydride at 70/30 (mass ratio) (Rikacid (registered trademark) MH-700, supplied by New Japan Chemical Co., Ltd.)
∘ triphenyl phosphine (TPP, supplied by Hokko Chemical Industry Co., Ltd.)

### < crosslinked resin particles (component [D]) >

∘ crosslinked polyurethane (Daimic Beads (registered trademark) UCN-5051D, average particle diameter 15 µm, refractive index 1.49, supplied by Dainichiseika Colour & Chemicals Mfg. Co., Ltd.)
∘ styrene-divinylbenzene copolymer (Techpolymer (registered trademark) SBX-12, average particle diameter 12 µm, refractive index 1.59, Sekisui Plastics Co., Ltd.)
∘ styrene-divinylbenzene copolymer (Chemisnow (registered trademark) SGP-150C, average particle diameter 55 µm, refractive index 1.59, supplied by Soken Chemical & Engineering Co., Ltd.)
∘ hollow glass particles (Sphericel (registered trademark) 110P8, average particle diameter 12 µm, refractive index 1.51, Potters-Ballotini Co., Ltd.)
∘ silica particles (Admafine (registered trademark) SO-C6, average particle diameter 2.2 µm, refractive index 1.46, Admatechs Co., Ltd.)
∘ alumina particles (Admafine (registered trademark) AO-509, average particle diameter 10 µm, refractive index 1.76, Admatechs Co., Ltd.)

### < carbon black (component [E]) >

∘ Mitsubishi (registered trademark) Carbon Black RCF#10 (average particle diameter 75 nm, supplied by Mitsubishi Chemical Corporation)
∘ Mitsubishi (registered trademark) Carbon Black RCF#40 (average particle diameter 24 nm, supplied by Mitsubishi Chemical Corporation)
∘ Mitsubishi (registered trademark) Carbon Black MCF#990 (average particle diameter 16 nm, supplied by Mitsubishi Chemical Corporation)

### < thermoplastic resin (component [F]) >

∘ Vinylec (registered trademark) K (polyvinyl formal, supplied by Chisso Corporation)

### (2) Resin preparation procedure

An epoxy resin for component [B], along with a thermoplastic resin for component [F] if necessary for a specified composition, was fed to a kneading machine and heated up to a temperature of 160°C, followed by kneading under heat at a temperature of 160°C for 30 minutes. Here, in the case where a thermoplastic resin was added as component [F], it was confirmed by the method (8) described later that the thermoplastic resin in a solid state was absent in the resulting resin composition. Subsequently, the temperature was lowered down to 60 to 80°C while continuing the kneading, and crosslinked resin particles for component [D] and carbon black for component [E] were added according to a specified composition and stirred for 30 minutes. While continuing the kneading, the temperature was lowered down to 55 to 65°C, and a curing agent for component [C] was added and stirred for 30 minutes to provide an epoxy resin composition.

### (3) Prepreg preparation procedure

### < prepreg preparation procedure 1 >

Component [B], component [C], component [D], and component [E], along with component [F] if necessary for a specified composition, were kneaded as described above, and the resulting epoxy resin composition was spread with a knife coater over a piece of release paper to provide two resin film sheets with a basis weight (weight per unit surface area) of 37 g/m². Subsequently, a carbon fiber material produced by pulling fibers so as to paralleling them in one direction to form a sheet with a weight per unit area of 149 g/m² was used as component [A], and the two resin film sheets obtained above were attached to sandwich the carbon fiber sheet and pressurized under heat under the conditions of a temperature of 90°C and pressure of 2 MPa to ensure impregnation with the epoxy resin composition to provide a unidirectional prepreg with a Wf of 67 mass%.

### < prepreg preparation procedure 2 >

Component [B], component [C], and component [E], along with component [F] if necessary for a specified composition, were kneaded as described above, and the resulting epoxy resin composition 1 was spread with a knife coater over a piece of release paper to provide two sheets of resin film 1 with a basis weight of 17 g/m². Subsequently, a carbon fiber material produced by pulling fibers so as to paralleling them in one direction to form a sheet with a weight per unit area of 149 g/m² was used as component [A], and the sheets of two resin film 1 obtained above were attached to sandwich the carbon fiber sheet and pressurized under heat under the conditions of a temperature of 90°C and pressure of 2 MPa to ensure impregnation with the epoxy resin composition to provide a prepreg precursor with a Wf of 79 mass%.

Following this, component [B], component [C], component [D], and component [E], along with component [F] if necessary for a specified composition, were kneaded as described above, and the resulting epoxy resin composition 2 was spread with a knife coater over a piece of release paper to provide two sheets of resin film 2 with a basis weight of 20 g/m². Subsequently, the two sheets of resin film 2 were attached to the aforementioned prepreg precursor so as to sandwich the prepreg precursor and pressurized under heat under the conditions of a temperature of 60°C and pressure of 0.5 MPa to provide a prepreg with a Wf of 67 mass%.

### (4) Molding of fiber reinforced composite material

Six sheets of the unidirectional prepreg obtained by the aforementioned procedure described in (3) was stacked with the carbon fibers aligned in the directions of [0°/ 90°/ 0°/ 0°/ 90°/ 0°] to provide a preliminary laminate. The resulting preliminary laminate was placed in an autoclave, and under a pressure of 0.6 MPa, it was heated from room temperature to a temperature of 120°C at a heating rate of 1.7°C per minute and cured for one hour at a temperature of 120°C to provide a fiber reinforced composite material.

### (5) Measuring method for refractive index

Refractive index n₁ of the crosslinked resin particles used as component [D] was measured by the Becke line method specified in JIS K 7142 (1996).

An epoxy resin composition prepared by the same procedure as the aforementioned procedure described in (2) except for the absence of component [D] and component [E] was injected into a specified mold with a gap of 1 mm and heated from room temperature to a temperature of 120°C at a heating rate of 1.5°C per minute and cured for one hour at a temperature of 120°C in hot-air oven. A specimen with a length of 20 mm and width of 8 mm was cut out of the cured material obtained from an epoxy resin composition, and its refractive index no (for a resin composition without component [F]) or no' (for a resin composition containing component [F]) was measured with an Abbe refractometer as specified in JIS K 7142 (1996).

The ratio n₁/n₀ or n₁/n₀' was calculated from the measurements.

### (6) Evaluation for components in the region occupying 10% of the average prepreg thickness from each prepreg surface

The prepreg prepared by the aforementioned procedure described in (3) was sandwiched between two polytetrafluoroethylene resin plates with smooth surfaces and brought into close contact, and then the temperature was increased gradually for 7 days up to 150°C to ensure gelation and curing, thus producing a plate-like cured resin. After the completion of curing, the cured material was cut in a direction perpendicular to the contact interface, and the cross section was polished and photographed with an optical microscope at a magnification of x200 or more in such a manner that the upper and lower surfaces of the prepreg are included in the field of view. The distance between the polytetrafluoroethylene resin plates was measured at five points aligned in the lateral direction in the cross-sectional photograph, and the average of the measurements was assumed to represent the average thickness of the prepreg.

This photograph was used also for confirming the existence or absence of the reinforcement fiber used as component [A] in the region that occupies 10% of the average thickness of the prepreg from each surface of the prepreg.

### (7) Evaluation for proportion of crosslinked resin particles of component [D] located within a depth equivalent to 20% of the average thickness of the prepreg.

The prepreg prepared by the aforementioned procedure described in (3) was sandwiched between two polytetrafluoroethylene resin plates with smooth surfaces and brought into close contact, and then the temperature was increased gradually for 7 days up to 150°C to ensure gelation and curing, thus producing a plate-like cured resin. After the completion of curing, the cured material was cut in a direction perpendicular to the contact interface, and the cross section was polished and photographed with an optical microscope at a magnification of x200 or more in such a manner that the upper and lower surfaces of the prepreg are included in the field of view. The distance between the polytetrafluoroethylene resin plates was measured at five points aligned in the lateral direction in the cross-sectional photograph, and the average of the measurements was assumed to represent the average thickness of the prepreg.

In the photograph of the prepreg, a line parallel to each surface of the prepreg was drawn at a depth from the surface of the cured prepreg equal to 20% of the average thickness of the prepreg. Then, the total area of the particles of component [D] existing between each surface of the prepreg and each of the lines drawn above and the total area of the particles existing across the entire thickness of the prepreg were determined, followed by calculating the proportion of the particles present in the regions extending from the prepreg surface to a depth equal to 20% of the entire (100%) thickness of the prepreg. Here, the total area of the aforementioned particles was determined by cutting the particle portions out of the cross-sectional photograph and converting their weight. When it was found difficult to distinguish particles dispersed the resin in the photograph, the particles were dyed appropriately and rephotographed.

### (8) Confirmation of solid fragments of thermoplastic resin of component [F]

An epoxy resin for component [B] was mixed with a thermoplastic resin for component [F] in a kneading machine and heated up to a temperature of 160°C, followed by kneading under heat at a temperature of 160°C for 30 minutes to provide a resin composition. An appropriate quantity of the resulting resin composition was put on a slide glass, covered with a cover glass, and observed with a transmission type optical microscope at a magnification of x5 to determine the existence or absence of solid fragments of component [F] with a size of 0.1 µm or more.

### (9) Measurement of viscosity of epoxy resin composition

The viscosity of the epoxy resin composition produced by the aforementioned procedure described in (2) at a temperature of 100°C was measured by using a dynamic viscoelasticity measuring machine (ARES-2KFRTN1-FCO-STD, supplied by TA Instruments) along with flat parallel plates with a diameter of 40 mm installed on the upper and lower measuring jigs. The epoxy resin composition was set between the upper and lower measuring jigs separated with a jig distance of 1 mm, and measurements were made in the twisting mode (measuring frequency 0.5 Hz) in the temperature range of 40 to 140°C at a heating rate of 1.5°C/min.

### (10) Tackiness (adhesiveness)

The tackiness of the prepreg produced by the aforementioned procedure described in (3) was measured as follows. A cover glass with a size of 18 × 18 mm was pressure-bonded to the prepreg by applying a load of 3.9 N for 5 seconds, and it was pulled in a tackiness tester (PICMA Tackiness Tester II, supplied by Toyo Seiki Co., Ltd.) at a speed of 30 mm/min to determine the resistance against the removal of the cover glass, which was used to represent the tackiness. Of seven measurements made (n = 7), the largest and smallest ones were excluded, and the tackiness evaluation was carried out based on the average of the remaining five measurements.

### (11) Evaluation method for surface appearance quality

The appearance quality of the fiber reinforced composite material produced by the aforementioned procedure described in (4) was observed visually, and evaluations were made based on observed appearance irregularities such as fluctuations and blebs.

### (Example 1)

An epoxy resin composition was prepared from the following components by the aforementioned procedure described in (2).
20 parts by mass of Epotohto (registered trademark) YD128, 50 parts by mass of jER (registered trademark) 1001, and 30 parts by mass of jER (registered trademark) 154, as component [B],
3.5 parts by mass of DICY7 and 2 parts by mass of Omicure (registered trademark) 24, as component [C],
10 parts by mass of Daimic Beads (registered trademark) UCN-5051D as component [D], and
1 part by mass of Mitsubishi (registered trademark) Carbon Black RCF#40 as component [E].

The refractive index, n₁, of component [D] and the refractive index, n₀, of a cured epoxy resin produced by curing a resin composition composed of component [B] and component [C] were measured by the aforementioned method (5), and the results were as follows: n₁ = 1.49, n₀ = 1.59, and accordingly n₁/n₀ = 0.94.

The complex viscosity η^{*} of the resulting epoxy resin composition was measured by the aforementioned method (9), and the results showed that the complex viscosity η^{*} was 2.7 Pa·s.

The resulting epoxy resin composition was used in combination with Torayca (registered trademark) T700SC-12K as component [A] to prepare a prepreg by the prepreg preparation procedure 1 described in the aforementioned section (3).

The resulting prepreg was subjected to measurement by the method described in section (10), and the results shows that the tackiness was 4.9 N which was in the allowable range though not significantly high

Subsequently, the components present in the region covering 10% of the average thickness of the prepreg from each surface of the prepreg was examined according to the method described in section (6) above, and results showed that component [A] was not contained. Furthermore, the proportion of the crosslinked resin particles of component [D] existing in the region extending from each prepreg surface to a depth equal to 20% of the average prepreg thickness was examined by the method described in section (7) above, and results showed that it was 93 mass% of the total quantity of component [D].

The resulting prepreg was used to provide a fiber reinforced composite material by the procedure described in (4) above. The appearance quality of the resulting fiber reinforced composite material was evaluated based on visual observation, and results showed that there were no appearance irregularities such as fluctuations and blebs and that a molded product with good appearance design characteristics highlighting fiber patterns was obtained.

### (Examples 2 to 12)

Except for using the components given in Table 1 and Table 2, the same procedures as in Example 1 were carried out to provide an epoxy resin composition, prepreg, and fiber reinforced composite material. Results are given in Table 1 and Table 2.

The prepregs prepared in Example 4 to 7 and 9 to 11 were particularly high in tackiness.

In Example 12, the complex viscosity η^{*} of the epoxy resin composition was examined by the same procedure as in Example 1. However, the reaction started and the viscosity began rising at 80°C, and it was impossible to measure the complex viscosity η* at 100°C. In Example 12, the complex viscosity η* of the epoxy resin composition was measured at 80°C.

### (Example 13)

An epoxy resin composition 1 was prepared from the following components by the procedure described in section (2) above.
20 parts by mass of Epotohto (registered trademark) YD128, 50 parts by mass of jER (registered trademark) 1001, and 30 parts by mass ofjER (registered trademark) 154, as component [B],
3.5 parts by mass of DICY7 and 2 parts by mass of Omicure (registered trademark) 24, as component [C],
1 part by mass of Mitsubishi (registered trademark) Carbon Black RCF#40 as component [E].

The complex viscosity η^{*} of the resulting epoxy resin composition 1 was measured by the same procedure as in Example 1, and the results showed that the complex viscosity η^{*} was 2.1 Pa·s.

An epoxy resin composition 2 was prepared from the following components by the procedure described in section (2) above.
20 parts by mass of Epotohto (registered trademark) YD128, 50 parts by mass of jER (registered trademark) 1001, and 30 parts by mass of jER (registered trademark) 154, as component [B],
3.5 parts by mass of DICY7 and 2 parts by mass of Omicure (registered trademark) 24, as component [C],
20 parts by mass of Daimic Beads (registered trademark) UCN-5051D as component [D], and
1 part by mass of Mitsubishi (registered trademark) Carbon Black RCF#40 as component [E].

The complex viscosity η^{*} of the resulting epoxy resin composition 2 was measured by the same procedure as in Example 1, and the results showed that the complex viscosity η^{*} was 3.4 Pa·s.

For both epoxy resin compositions 1 and 2 obtained above, the refractive index, no, of a cured epoxy resin produced by curing the resin composition composed of component [B] and component [C] was measured by the method described in section (5) above, and the results showed that n₀ was 1.59 for both epoxy resin compositions 1 and 2. The refractive index, n₁, of component [D] was measure by the same procedure, and results showed that n₁ was 1.49 and accordingly n₁/n₀ was 0.94.

The resulting epoxy resin compositions 1 and 2 were used in combination with Torayca (registered trademark) T700SC-12K as component [A] to prepare prepregs by the prepreg preparation procedure 2 described in section (3) above.

The resulting prepreg was subjected to measurement by the method described in section (10), and the results shows that the tackiness was 4.7 N which was in the allowable range though not significantly high

Subsequently, the components present in the region covering 10% of the average thickness of the prepreg from each surface of the prepreg was examined by the same procedure as in Example 1, and results showed that component [A] was not contained. Furthermore, the proportion of the crosslinked resin particles of component [D] existing in the region extending from each prepreg surface to a depth equal to 20% of the average prepreg thickness was examined by the same procedure as in Example 1, and results showed that it was 95 mass% of the total quantity of component [D].

The appearance quality of the resulting fiber reinforced composite material was evaluated based on visual observation by the same procedure as in Example 1, and results showed that there were no appearance irregularities such as fluctuations and blebs and that a molded product with good appearance design characteristics highlighting fiber patterns was obtained.

### (Examples 14 to 24)

Except for using the components given in Table 3 and Table 4, the same procedures as in Example 13 were carried out to provide an epoxy resin composition, prepreg, and fiber reinforced composite material. Results are given in Table 5.

The prepregs prepared in Example 16 to 19 and 21 to 23 were particularly high in tackiness.

In Example 24, the complex viscosity η* of the epoxy resin composition was examined by the same procedure as in Example 1. However, the reaction started and the viscosity began rising at 80°C, and it was impossible to measure the complex viscosity η* at 100°C. In Example 24, the complex viscosity η* of the epoxy resin composition was measured at 80°C.

### (Comparative examples 1 to 6)

Except for using the components given in Table 6, the same procedures as in Example 1 were carried out to provide an epoxy resin composition, prepreg, and fiber reinforced composite material.

The appearance quality of the fiber reinforced composite materials obtained in Comparative examples 1 to 6 were evaluated based on visual observation by the same procedure as in Example 1, and results showed that there were some appearance irregularities such as fluctuations and blebs, resulting in inferior appearance quality.

### (Comparative examples 7 and 8)

Except for using the components given in Table 7, the same procedures as in Example 13 were carried out to provide an epoxy resin composition, prepreg, and fiber reinforced composite material.

The appearance quality of the fiber reinforced composite materials obtained in Comparative examples 7 and 8 were evaluated based on visual observation by the same procedure as in Example 1, and results showed that there were some appearance irregularities such as fluctuations and blebs, resulting in inferior appearance quality.

**[Table 1]**

| Constitution | Components | | | | Example 1 | Example 2 | Example 3 | Example 4 | Example 5 | Example 6 |
|---|---|---|---|---|---|---|---|---|---|---|
| Component [A] | Torayca T700SC-12000 | | Wf | | 67 | 67 | 67 | 67 | 67 | 67 |
| Component [B] | Epotohto YD128 | | | | 20 | 20 | 20 | 35 | 35 | 30 |
| | jER1001 | | | | 50 | 50 | 40 | 30 | 30 | 35 |
| | jER154 | | | | 30 | 30 | 40 | 35 | 35 | 35 |
| Component [C] | DICY7 | | | | 3.5 | 3.5 | 3.5 | 3.5 | 3.5 | 3.5 |
| | Omicure 24 | | | | 2 | 2 | 2 | 2 | 2 | 2 |
| | 3,3'-DAS | | | | - | - | - | - | - | - |
| | Rikacid MH700 | | | | - | - | - | - | - | - |
| | TPP | | | | - | - | - | - | - | - |
| | | | particle diameter | refractive index n₁ | | | | | | |
| Component [D] | Techpolymer SBX-12 | styrene-divinylbenzene resin | 12 µm | 1.59 | - | - | - | - | 15 | 30 |
| | Daimic Beads UCN-5150D | crosslinked polyurethane | 15 µm | 1.49 | 10 | 30 | 50 | 10 | - | - |
| | Chemisnow SGP-150C | styrene-divinylbenzene resin | 55 µm | 1.59 | - | - | - | - | - | - |
| Component [E] | Mitsubishi Carbon Black RCF#10 | | 75 nm | - | - | - | - | 1 | - | - |
| | Mitsubishi Carbon Black RCF#40 | | 24 nm | - | 1 | 2 | 1 | - | 1 | - |
| | Mitsubishi Carbon Black #990 | | 16 nm | - | - | - | - | - | - | 2 |
| Component [F] | Vinylec K | PVF | - | - | - | - | - | 6 | 4 | 3 |
| Resin properties | solid content of component [F] | | | | - | - | - | none | none | none |
| | existence of component [A] in region occupying 10% of average prepreg thickness from each prepreg surface | | | | none | none | none | none | none | none |
| | proportion (mass%) of component [D] existing in region occupying 20% of average prepreg thickness from each prepreg surface | | | | 93 | 90 | 88 | 93 | 91 | 90 |
| | refractive index: n₁/n₀ (n₁/n₀') ^{*1} | | | | 0.94 | 0.94 | 0.94 | 0.94 | 1 | 1 |
| | complex viscosity η* (Pa·s) at 100°C | | | | 2.7 | 3 | 2.4 | 9.8 | 8.2 | 8.4 |
| | tackiness (N) | | | | 4.9 | 4.9 | 4.9 | 17.6 | 16.7 | 14.7 |
| | appearance of moldings (existence of unevenness irregularities) | | | | none | none | none | none | none | none |

| | | | | | | | | | | |
|---|---|---|---|---|---|---|---|---|---|---|
| *1: n1/n0 for prepreg lacking component [F], and n1/n0' for prepreg containing component [F] *2: complex viscosity at 80°C | | | | | | | | | | |

**[Table 2]**

| Constitution | Components | | | | Example 7 | Example 8 | Example 9 | Example 10 | Example 11 | Example 12 |
|---|---|---|---|---|---|---|---|---|---|---|
| Component [A] | Torayca T700SC-12000 | | Wf | | 67 | 67 | 67 | 67 | 67 | 67 |
| Component [B] | Epotohto YD128 | | | | 30 | 20 | 100 | 30 | 30 | 20 |
| | jER1001 | | | | 35 | 40 | 0 | 35 | 35 | 40 |
| | jER154 | | | | 35 | 40 | 0 | 35 | 35 | 40 |
| Component [C] | DICY7 | | | | 3.5 | 3.5 | 3.5 | 3.5 | - | - |
| | Omicure 24 | | | | 2 | 2 | 2 | 2 | - | - |
| | 3,3'-DAS | | | | - | - | - | - | 27 | - |
| | Rikacid MH700 | | | | - | - | - | - | - | 70 |
| | TPP | | | | - | - | - | - | - | 1 |
| | | | particle diameter | refractive index n₁ | | | | | | |
| Component [D] | Techpolymer SBX-12 | styrene-divinylbenzene resin | 12 µm | 1.59 | 50 | 10 | 70 | - | 30 | 30 |
| | Daimic Beads UCN-5150D | crosslinked polyurethane | 15 µm | 1.49 | - | - | - | - | - | - |
| | Chemisnow SGP-150C | styrene-divinylbenzene resin | 55 µm | 1.59 | - | - | - | 30 | - | - |
| Component [E] | Mitsubishi Carbon Black RCF#10 | | 75 nm | - | - | - | - | - | - | - |
| | Mitsubishi Carbon Black RCF#40 | | 24 nm | - | 1 | 1 | 5 | 1 | 1 | 1 |
| | Mitsubishi Carbon Black #990 | | 16 nm | - | - | - | - | - | - | - |
| Component [F] | Vinylec K | PVF | - | - | 3 | 1 | 10 | 3 | 3 | 6 |
| Resin properties | solid content of component [F] | | | | none | none | none | none | none | none |
| | existence of component [A] in region occupying 10% of average prepreg thickness from each prepreg surface | | | | none | none | none | none | none | none |
| | proportion (mass%) of component [D] existing in region occupying 20% of average prepreg thickness from each prepreg surface | | | | 89 | 87 | 85 | 87 | 88 | 90 |
| | refractive index: n₁/n₀ (n₁/n₀') ^{*1} | | | | 1 | 1 | 1 | 1 | 1 | 1 |
| | complex viscosity η* (Pa·s) at 100°C | | | | 8.5 | 2.5 | 9.9 | 8.4 | 3.2 | 2.2 ^{*2} |
| | tackiness (N) | | | | 14.7 | 3.9 | 19.6 | 15.7 | 12.7 | 4.9 |
| | appearance of moldings (existence of unevenness irregularities) | | | | none | none | none | none | none | none |

| | | | | | | | | | | |
|---|---|---|---|---|---|---|---|---|---|---|
| *1: n1/n0 for prepreg lacking component [F], and n1/n0' for prepreg containing component [F] *2: complex viscosity at 80°C | | | | | | | | | | |

**[Table 3]**

| Constitution | | Components | | | | Example 13 | Example 14 | Example 15 | Example 16 | Example 17 | Example 18 |
|---|---|---|---|---|---|---|---|---|---|---|---|
| Component [A] | | Torayca T700SC-12000 | | Wf | | 67 | 67 | 67 | 67 | 67 | 67 |
| Epoxy resin composition 1 | Component [B] | Epotohto YD128 | | | | 20 | 20 | 20 | 35 | 35 | 30 |
| | | jER1001 | | | | 50 | 50 | 40 | 30 | 30 | 35 |
| | | jER154 | | | | 30 | 30 | 40 | 35 | 35 | 35 |
| | Component [C] | DICY7 | | | | 3.5 | 3.5 | 3.5 | 3.5 | 3.5 | 3.5 |
| | | Omicure 24 | | | | 2 | 2 | 2 | 2 | 2 | 2 |
| | | 3,3'-DAS | | | | - | - | - | - | - | - |
| | | Rikacid MH700 | | | | - | - | - | - | - | - |
| | | TPP | | | | - | - | - | - | - | - |
| | Component [E] | | | particle diameter | | | | | | | |
| | | Mitsubishi Carbon Black RCF#10 | | 75 nm | | - | - | - | 1 | - | - |
| | | Mitsubishi Carbon Black RCF#40 | | 24 nm | | 1 | 2 | 3 | - | 1 | - |
| | | Mitsubishi Carbon Black #990 | | 16 nm | | - | - | - | - | - | 2 |
| | Component [F] | Vinylec K | PVF | - | | - | - | - | 8 | 8 | 6 |
| Epoxy resin composition 2 | Component [B] | Epotohto YD128 | | | | 20 | 20 | 20 | 35 | 35 | 30 |
| | | jER1001 | | | | 50 | 50 | 40 | 30 | 30 | 35 |
| | | jER154 | | | | 30 | 30 | 40 | 35 | 35 | 35 |
| | Component [C] | DICY7 | | | | 3.5 | 3.5 | 3.5 | 3.5 | 3.5 | 3.5 |
| | | Omicure 24 | | | | 2 | 2 | 2 | 2 | 2 | 2 |
| | | 3,3'-DAS | | | | - | - | - | - | - | - |
| | | Rikacid MH700 | | | | - | - | - | - | - | - |
| | | TPP | | | | - | - | - | - | - | - |
| | | | | particle diameter | refractive index n₁ | | | | | | |
| | Component [D] | Techpolymer SBX-12 | styrene-divinylbenzen e resin | 12 µm | 1.59 | - | - | - | - | 30 | 55 |
| | | Daimic Beads UCN-5150D | crosslinked polyurethane | 15 µm | 1.49 | 20 | 55 | 70 | 20 | - | - |
| | | Chemisnow SGP-150C | styrene-divinylbenzen e resin | 55 µm | 1.59 | - | - | - | - | - | - |
| | Component [E] | Mitsubishi Carbon Black RCF#10 | | 75 nm | - | - | - | - | 1 | - | - |
| | | Mitsubishi Carbon Black RCF#40 | | 24 nm | - | 1 | 2 | 3 | - | 1 | - |
| | | Mitsubishi Carbon Black #990 | | 16 nm | - | - | - | - | - | - | 2 |
| | Component [F] | Vinylec K | PVF | - | - | - | - | - | 4.5 | 1 | 1 |

**[Table 4]**

| Constitution | | Components | | | | Example 19 | Example 20 | Example 21 | Example 22 | Example 23 | Example 24 |
|---|---|---|---|---|---|---|---|---|---|---|---|
| Component [A] | | Torayca T700SC-12000 | | Wf | | 67 | 67 | 67 | 67 | 67 | 67 |
| Epoxy resin composition 1 | Component [B] | Epotohto YD128 | | | | 30 | 20 | 100 | 30 | 30 | 20 |
| | | jER1001 | | | | 35 | 40 | 0 | 35 | 35 | 40 |
| | | jER154 | | | | 35 | 40 | 0 | 35 | 35 | 40 |
| | Component [C] | DICY7 | | | | 3.5 | 3.5 | 3.5 | 3.5 | - | - |
| | | Omicure 24 | | | | 2 | 2 | 2 | 2 | - | - |
| | | 3,3'-DAS | | | | - | - | - | - | 27 | - |
| | | Rikacid MH700 | | | | - | - | - | - | - | 70 |
| | | TPP | | | | - | - | - | - | - | 1 |
| | Component [E] | | | particle diameter | | | | | | | |
| | | Mitsubishi Carbon Black RCF#10 | | 75 nm | | - | - | - | - | - | - |
| | | Mitsubishi Carbon Black RCF#40 | | 24 nm | | 1 | 1 | 1 | 1 | 1 | 1 |
| | | Mitsubishi Carbon Black #990 | | 16 nm | | - | - | - | - | - | - |
| | Component [F] | Vinylec K | PVF | - | | 6 | 1.5 | 14 | 6 | 5.5 | 10 |
| Epoxy resin composition 2 | Component [B] | Epotohto YD128 | | | | 30 | 20 | 100 | 30 | 30 | 20 |
| | | jER1001 | | | | 35 | 40 | 0 | 35 | 35 | 40 |
| | | jER154 | | | | 35 | 40 | 0 | 35 | 35 | 40 |
| | Component [C] | DICY7 | | | | 3.5 | 3.5 | 3.5 | 3.5 | - | - |
| | | Omicure 24 | | | | 2 | 2 | 2 | 2 | - | - |
| | | 3,3'-DAS | | | | - | - | - | - | 27 | - |
| | | Rikacid MH700 | | | | - | - | - | - | - | 70 |
| | | TPP | | | | - | - | - | - | - | 1 |
| | | | | particle diameter | refractive index n₁ | | | | | | |
| | Component [D] | Techpolymer SBX-12 | styrene-divinylbenzen e resin | 12 µm | 1.59 | 70 | 20 | 25 | - | 55 | 55 |
| | | Daimic Beads UCN-5150D | crosslinked polyurethane | 15 µm | 1.49 | - | - | - | - | - | - |
| | | Chemisnow SGP-150C | styrene-divinylbenzen e resin | 55 µm | 1.59 | - | - | - | 55 | - | - |
| | Component [E] | Mitsubishi Carbon Black RCF#10 | | 75 nm | - | | | - | - | - | - |
| | | Mitsubishi Carbon Black RCF#40 | | 24 nm | - | 1 | 1 | 1 | 1 | 1 | 1 |
| | | Mitsubishi Carbon Black #990 | | 16 nm | - | - | - | - | - | - | - |
| | Component [F] | Vinylec K | PVF | - | - | 0.5 | 0.5 | 6.5 | 1 | 1 | 2.5 |

**[Table 5]**

| | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|
| solid content of component [F] | | - | - | - | none | none | none | none | none | none | none | none | none |
| existence of component [A] in region occupying 10% of average prepreg thickness from each prepreg surface | | none | none | none | none | none | none | none | none | none | none | none | none |
| proportion (mass%) of component [D] existing in region occupying 20% of average prepreg thickness from each prepreg surface | | 95 | 92 | 90 | 95 | 93 | 93 | 92 | 89 | 88 | 90 | 91 | 92 |
| refractive index: n₁/n₀(n₁/n₀')*¹ | | 0.94 | 0.94 | 0.94 | 0.94 | 1 | 1 | 1 | 1 | 1 | 1 | 1 | 1 |
| complex viscosity η* (Pa·s)at 100°C | epoxy resin composition 1 | 2.1 | 2.1 | 2.3 | 9.4 | 9.4 | 8.0 | 8.0 | 3.8 | 10.0 | 8.0 | 2.9 | 2.0*² |
| | epoxy resin composition 2 | 3.4 | 4.2 | 5.0 | 10.0 | 7.8 | 8.8 | 9.2 | 2.4 | 7.6 | 8.6 | 3.7 | 2.5*² |
| tackiness (N) | | 4.7 | 4.5 | 4.8 | 16.8 | 15.6 | 13.8 | 13.6 | 3.5 | 19.8 | 14.9 | 12.0 | 3.9 |
| appearance of moldings (existence of unevenness irregularities) | | none | none | none | none | none | none | none | none | none | none | none | none |

| | | | | | | | | | | | | | |
|---|---|---|---|---|---|---|---|---|---|---|---|---|---|
| *1: n1/n0 for prepreg lacking component [F], and n1/n0' for prepreg containing component [F] *2: complex viscosity at 80°C | | | | | | | | | | | | | |

**[Table 6]**

| Constitution | Components | | | | Comparative example 1 | Comparative example 2 | Comparative example 3 | Comparative example 4 | Comparative example 5 | Comparative example 6 |
|---|---|---|---|---|---|---|---|---|---|---|
| Component [A] | Torayca T700SC-12000 | | Wf | | 67 | 67 | 67 | 67 | 67 | 67 |
| Component [B] | Epotohto YD128 | | | | 30 | 35 | 35 | 35 | 35 | 35 |
| | jER1001 | | | | 35 | 30 | 30 | 30 | 30 | 30 |
| | jER154 | | | | 35 | 35 | 35 | 35 | 35 | 35 |
| Component [C] | DICY7 | | | | 3.5 | 3.5 | 3.5 | 3.5 | 3.5 | 3.5 |
| | Omicure 24 | | | | 2 | 2 | 2 | 2 | 2 | 2 |
| | | | particle diameter | refractive index n₁ | | | | | | |
| Component [D] | Techpolymer SBX-12 | styrene-divinylbenzen e resin | 12 µm | 1.59 | - | - | 30 | - | - | - |
| | Sphericel110P8 | hollow glass | 12 µm | 1 | - | - | - | 30 | - | - |
| | Admafine SO-C6 | silica | 2.2 µm | 1.46 | - | - | - | - | 30 | - |
| | Admafine AO-509 | alumina | 10 µm | 1.76 | - | - | - | - | - | 30 |
| Component [E] | Mitsubishi Carbon Black RCF#40 | | 24 nm | - | - | 1 | - | 1 | 1 | 1 |
| | Mitsubishi Carbon Black #990 | | 16 nm | - | - | - | - | - | - | - |
| Component [F] | Vinylec K PVF | | - | - | 3 | 6 | 3 | 3 | 3 | 3 |
| Resin properties | solid content of component [F] | | | | none | none | none | none | none | none |
| | existence of component [A] in region occupying 10% of average prepreg thickness from each prepreg surface | | | | present | present | none | none | none | none |
| | proportion (mass%) of component [D] existing in region occupying 20% of average prepreg thickness from each prepreg surface | | | | - | - | 85 | 87 | 88 | 87 |
| | refractive index: n₁/n₀(n₁/n₀')*¹ | | | | - | - | 1 | 0.63 | 0.92 | 1.1 |
| | complex viscosity η* (Pa·s) at 100°C | | | | 7 | 9 | 8.1 | 8.4 | 8.1 | 8 |
| | tackiness (N) | | | | 16.7 | 17.6 | 14.7 | 13.7 | 12.7 | 14.7 |
| | appearance of moldings (existence of unevenness irregularities) | | | | present | present | present | present | present | present |

| | | | | | | | | | | |
|---|---|---|---|---|---|---|---|---|---|---|
| *1: n1/n0 for prepreg lacking component [F], and n1/n0' for prepreg containing component [F] | | | | | | | | | | |

**[Table 7]**

| Constitution | | Components | | | | Comparative example 7 | Comparative example 8 |
|---|---|---|---|---|---|---|---|
| Component [A] | | Torayca T700SC-12000 | | Wf | | 67 | 67 |
| Epoxy resin composition 1 | Component [B] | Epotohto YD128 | | | | 30 | 35 |
| | | jER1001 | | | | 35 | 30 |
| | | jER154 | | | | 35 | 35 |
| | Component [C] | DICY7 | | | | 3.5 | 3.5 |
| | | Omicure 24 | | | | 2 | 2 |
| | | | | particle diameter | | | |
| | Component [E] | Mitsubishi Carbon Black RCF#40 | | 24 nm | | - | 1 |
| | Component [F] | Vinylec K | PVF | - | | 3 | 6 |
| Epoxy resin composition 2 | Component [B] | Epotohto YD128 | | | | 30 | 30 |
| | | jER1001 | | | | 35 | 35 |
| | | jER154 | | | | 35 | 35 |
| | Component [C] | DICY7 | | | | 3.5 | 3.5 |
| | | Omicure 24 | | | | 2 | 2 |
| | | | | particle diameter | refractive index n₁ | | |
| | Component [E] | Mitsubishi Carbon Black RCF#40 | | 24 nm | - | - | 1 |
| | Component [F] | Vinylec K | PVF | - | - | 3 | 6 |
| Resin properties | | solid content of component [F] | | | | - | - |
| | | existence of component [A] in region occupying 10% of average prepreg thickness from each prepreg surface | | | | present | present |
| | | proportion (mass%) of component [D] existing in region occupying 20% of average prepreg thickness from each prepreg surface | | | | - | - |
| | | refractive index: n₁/n₀(n₁/n₀') | | | | - | - |
| | | complex viscosity η* (Pa·s) at 100°C | | epoxy resin composition 1 | | 7 | 9 |
| | | | | epoxy resin composition 2 | | 7 | 9 |
| | | tackiness (N) | | | | 16.7 | 17.6 |
| | | appearance of moldings (existence of unevenness irregularities) | | | | present | present |

### [Industrial applicability]

The prepreg according to the present invention serves to provide a fiber reinforced composite material with good appearance design characteristics highlighting fiber patterns of the reinforcement fiber. This fiber reinforced composite material can serve for a wide variety of uses including sports goods and industrial devices and can enhance their added values. Fiber reinforced composite materials produced from the prepreg according to the present invention can be used particularly favorably as material for housing electronic and electric components.

## Claims

1. A prepreg comprising components [A] to [E], the region that occupies 10% of the average thickness of the prepreg measured from each surface of the prepreg comprising components [B] to [E], and the following requirement (I) being met:
[A]: reinforcement fiber,
[B]: an epoxy resin having two or more epoxy groups per molecule,
[C]: a compound capable of curing component [B],
[D]: crosslinked resin particles with an refractive index in the range of 1.49 to 1.61, and
[E]: carbon black;
requirement (I): the refractive index, n₀, of a cured epoxy resin produced by curing a resin composition comprising component [B] and component [C], and the refractive index, n₁, of component [D] have the following relationship: 0.92 ≤ n₁/n₀ ≤ 1.05;
wherein component [E] accounts for 1 to 5 parts by mass per 100 parts by mass of component [B].

2. A prepreg according to claim 1 wherein 85 mass% or more of component [D] is present in the region that occupies 20% of the average thickness of the prepreg measured from each surface of the prepreg.

3. A prepreg according to claim 1 or 2 further comprising component [F], the region that occupies 10% of the average thickness of the prepreg measured from each surface of the prepreg comprising components [B] to [F], and the following requirement (II) being met:
[F]: a thermoplastic resin meeting requirement (i) described below:
requirement (i): a resin composition prepared by adding component [F] to component [B] and heating them for 30 minutes at a temperature of 160°C does not contain solid fragments of component [F] with a size of 0.1 µm or more;
requirement (II): the refractive index, no', of a cured epoxy resin produced by curing a resin composition comprising component [B], component [C], and component [F], and the refractive index, n₁, of component [D] have the following relationship: 0.92 ≤ n₁/n₀' ≤ 1.05.

4. A prepreg according to any one of claims 1 to 3 wherein an epoxy resin composition comprising components [B] to [E], along with component [F] if necessary, at 100°C has a complex viscosity η*, measured using a dynamic viscoelasticity measuring machine in the twisting mode at measuring frequency 0.5 Hz in the temperature range of 40 to 140°C at a heating rate of 1.5°C/min, in the range of 2 to 20 Pa · s.

5. A prepreg according to any one of claims 1 to 4 wherein component [D] has a volume average particle diameter in the range of 10 to 60 µm.

6. A prepreg according to any one of claims 1 to 5 wherein component [E] has a volume average particle diameter in the range of 1 to 80 nm.

7. A prepreg according to any one of claims 1 to 6 wherein component [D] is at least one selected from the group consisting of epoxy resin, polystyrene, and polyurethane.

8. A prepreg according to any one of claims 1 to 7 wherein component [D] accounts for 10 to 70 parts by mass per 100 parts by mass of component [B].

9. A prepreg according to any one of claims 3 to 8 wherein component [F] accounts for 1 to 10 parts by mass per 100 parts by mass of component [B].

10. A prepreg according to any one of claims 1 to 9 wherein component [A] is carbon fiber.

11. A production method for a prepreg as claimed in any one of claims 1 to 10 comprising preparing a resin film 1 that contains components [B], [C], and [E], along with component [F] if necessary, but does not contain component [D], impregnating component [A] therewith from one or each surface to provide a prepreg precursor, and applying a resin film 2 that contains components [B] to [E], along with component [F] if necessary, to one or each surface of the prepreg precursor to provide a prepreg.

12. A fiber reinforced composite material produced by curing a prepreg as claimed in any one of claims 1 to 10.

## Patentansprüche

1. Prepreg, das die Komponenten [A] bis [E] umfasst, wobei der Bereich, der 10 % der mittleren Dicke des Prepregs, gemessen von beiden Oberflächen des Prepregs, einnimmt, die Komponenten [B] bis [E] umfasst und die folgende Voraussetzung (I) erfüllt ist:
[A]: Verstärkungsfaser,
[B]: ein Epoxidharz, das zwei oder mehr Epoxidgruppen pro Molekül aufweist,
[C]: eine Verbindung, die in der Lage ist, die Komponente [B] zu härten,
[D]: vernetzte Harzpartikel mit einem Brechungsindex im Bereich von 1,49 bis 1,61, und
[E] Ruß;
Voraussetzung (I): der Brechungsindex n₀ eines gehärteten Epoxidharzes, das durch Härten einer Harzzusammensetzung erzeugt wurde, die Komponente [B] und Komponente [C] umfasst, und der Brechungsindex n₁ von Komponente [D] weisen die folgende Beziehung auf: 0,92 ≤ n₁/n₀ ≤ 1,05;
worin Komponente [E] 1 bis 5 Gewichtsteile pro 100 Gewichtsteile von Komponente [B] ausmacht.

2. Prepreg nach Anspruch 1, worin 85 Gew.-% oder mehr von Komponente [D] in dem Bereich vorhanden sind, der 20 % der mittleren Dicke des Prepregs, gemessen von beiden Oberflächen des Prepregs, einnimmt.

3. Prepreg nach Anspruch 1 oder 2, die weiters eine Komponente [F] umfasst, wobei der Bereich, der 10 % der mittleren Dicke des Prepregs, gemessen von beiden Oberflächen des Prepregs, einnimmt, die Komponenten [B] bis [F] umfasst und die folgende Voraussetzung (II) erfüllt ist:
[F]: ein thermoplastisches Harz, das die unten beschriebene Voraussetzung (i) erfüllt:
Voraussetzung (i): eine Harzzusammensetzung, die durch Zusetzen von Komponente [F] zu Komponente [B] und 30-minütiges Erhitzen auf eine Temperatur von 160 °C hergestellt wurde, enthält keine festen Fragmente von Komponente [F] mit einer Größe von 0,1 µm oder mehr;
Voraussetzung (II): der Brechungsindex n₀' eines gehärteten Epoxidharzes, das durch Härten einer Harzzusammensetzung erzeugt wurde, die Komponente [B], Komponente [C] und Komponente [D] umfasst, und der Brechungsindex n₁ von Komponente [D] weisen die folgende Beziehung auf: 0,92 ≤ n₁/ n₀' ≤ 1,05;

4. Prepreg nach einem der Ansprüche 1 bis 3, worin eine Epoxidharzzusammensetzung, die die Komponenten [B] bis [E], falls nötig zusammen mit Komponente [F], umfasst, bei 100 °C eine komplexe Viskosität η*, gemessen unter Verwendung einer Messvorrichtung für dynamische Viskoelastizität im Verdrehmodus mit einer Messfrequenz von 0,5 Hz im Temperaturbereich von 40 bis 140 °C mit einer Aufheizrate von 1,5 °C/min, im Bereich von 2 bis 20 Pa·s aufweist.

5. Prepreg nach Anspruch einem der Ansprüche 1 bis 4, worin Komponente [D] einen volumenmittleren Teilchendurchmesser im Bereich von 10 bis 60 µm aufweist.

6. Prepreg nach einem der Ansprüche 1 bis 5, worin Komponente [E] einen volumenmittleren Teilchendurchmesser im Bereich von 1 bis 80 nm aufweist.

7. Prepreg nach einem der Ansprüche 1 bis 6, worin Komponente [D] aus zumindest einem aus der aus Epoxidharz, Polystyrol und Polyurethan bestehenden Gruppe ausgewählt ist.

8. Prepreg nach einem der Ansprüche 1 bis 7, worin Komponente [D] 10 bis 70 Gewichtsteile pro 100 Gewichtsteile von Komponente [B] ausmacht.

9. Prepreg nach einem der Ansprüche 3 bis 8, worin Komponente [F] 1 bis 10 Gewichtsteile pro 100 Gewichtsteile von Komponente [B] ausmacht.

10. Prepreg nach einem der Ansprüche 1 bis 9, worin Komponente [A] Kohlenstofffasern sind.

11. Herstellungsverfahren für ein Prepreg nach einem der Ansprüche 1 bis 10, umfassend das Herstellen einer Harzschicht 1, die die Komponenten [B], [C] und [E], falls nötig zusammen mit Komponente [F], umfasst, nicht jedoch Komponente [D] umfasst, wobei Komponente [A] damit von einer oder beide der Oberflächen aus imprägniert wird, um einen Prepreg-Vorläufer bereitzustellen, und das Aufbringen einer Harzschicht 2, die die Komponenten [B] bis [E], falls nötig zusammen mit Komponente [F], umfasst, auf eine oder beide der Oberflächen des Prepreg-Vorläufers, um ein Prepreg bereitzustellen.

12. Faserverstärktes Verbundmaterial, hergestellt durch Härten eines Prepregs wie in einem der Ansprüche 1 bis 10 beansprucht.

## Revendications

1. Préimprégné comprenant des composants [A] à [E], la région qui occupe 10 % de l'épaisseur moyenne du préimprégné, mesurée à partir de chaque surface du préimprégné, comprenant les composants [B] à [E], et l'exigence (I) suivante étant satisfaite :
[A] : fibre de renforcement,
[B] : une résine époxy ayant deux ou plus de deux groupes époxy par molécule,
[C] : un composé capable de durcir le composant [B],
[D] : des particules de résine réticulée ayant un indice de réfraction situé dans la plage allant de 1,49 à 1,61, et
[E] : du noir de carbone ;
exigence (I) : l'indice de réfraction, n₀, d'une résine époxy durcie produite par durcissement d'une composition de résine comprenant le composant [B] et le composant [C], et l'indice de réfraction, n₁, du composant [D], ont la relation suivante : 0,92 ≤ n₁/n₀ ≤ 1,05 ;
dans lequel le composant [E] représente 1 à 5 parties en masse pour 100 parties en masse du composant [B].

2. Préimprégné selon la revendication 1, dans lequel 85 % en masse ou plus du composant [D] sont présents dans la région qui occupe 20 % de l'épaisseur moyenne du préimprégné, mesurée à partir de chaque surface du préimprégné.

3. Préimprégné selon la revendication 1 ou 2, comprenant en outre un composant [F], la région qui occupe 10 % de l'épaisseur moyenne du préimprégné, mesurée à partir de chaque surface du préimprégné, comprenant les composants [B] à [F], et l'exigence (II) suivante étant satisfaite :
[F] : une résine thermoplastique satisfaisant à l'exigence (i) décrite ci-dessous :
exigence (i) : une composition de résine préparée par addition du composant [F] au composant [B] et chauffage de ceux-ci pendant 30 minutes à une température de 160°C ne contient pas de fragments solides du composant [F] ayant une taille de 0,1 µm ou plus ;
exigence (II) : l'indice de réfraction, no', d'une résine époxy durcie produite par durcissement d'une composition de résine comprenant le composant [B], le composant [C] et le composant [F], et l'indice de réfraction, n₁, du composant [D], ont la relation suivante : 0,92 ≤ n₁/n_{0'} ≤ 1,05.

4. Préimprégné selon l'une quelconque des revendications 1 à 3, dans lequel une composition de résine époxy comprenant les composants [B] à [E], conjointement avec le composant [F] si nécessaire, à 100°C, a une viscosité complexe η*, mesurée par utilisation d'une machine de mesure de viscoélasticité dynamique en mode de torsion à une fréquence de mesure de 0,5 Hz et dans la plage de température allant de 40 à 140°C à une vitesse de montée en température de 1,5°C/min, située dans la plage allant de 2 à 20 Pa·s.

5. Préimprégné selon l'une quelconque des revendications 1 à 4, dans lequel le composant [D] a une granulométrie moyenne en volume située dans la plage allant de 10 à 60 µm.

6. Préimprégné selon l'une quelconque des revendications 1 à 5, dans lequel le composant [E] a une granulométrie moyenne en volume située dans la plage allant de 1 à 80 nm.

7. Préimprégné selon l'une quelconque des revendications 1 à 6, dans lequel le composant [D] est au moins l'un du groupe constitué par une résine époxy, le polystyrène, et le polyuréthane.

8. Préimprégné selon l'une quelconque des revendications 1 à 7, dans lequel le composant [D] représente de 10 à 70 parties en masse pour 100 parties en masse du composant [B].

9. Préimprégné selon l'une quelconque des revendications 3 à 8, dans lequel le composant [F] représente de 1 à 10 parties en masse pour 100 parties en masse du composant [B].

10. Préimprégné selon l'une quelconque des revendications 1 à 9, dans lequel le composant [A] est une fibre de carbone.

11. Procédé pour produire un préimprégné selon l'une quelconque des revendications 1 à 10, comprenant la préparation d'un film de résine 1 qui contient les composants [B], [C] et [E], conjointement avec le composant [F] si nécessaire, mais qui ne contient pas le composant [D], l'imprégnation de celui-ci par le composant [A] depuis une surface ou depuis chaque surface pour former un précurseur de préimprégné, et l'application d'un film de résine 2 qui contient les composants [B] à [E], conjointement avec le composant [F] si nécessaire, à une surface ou à chaque surface du précurseur de préimprégné, pour former un préimprégné.

12. Matériau composite renforcé par des fibres produit par durcissement d'un préimprégné selon l'une quelconque des revendications 1 à 10.
